# EUROPEAN PATENT APPLICATION

(11) **EP 3 375 280 A1**
(43) Date of publication of application: **19.09.2018**
(21) Application number: 17020102.4
(22) Date of filing: 14.03.2017
(51) Int. Cl.: A01K 7/02

(54) **LIQUID SUPPLY DEVICE FOR ANIMALS**

(71) Applicant: Max-Planck-Gesellschaft zur Förderung der Wissenschaften e.V., 80539 München (DE)
(72) Inventor: Totah, Nelson, 72074 Tübingen (DE); Vasilev, Dmitrii, 72076 Tübingen (DE); Boldt, Johannes, 72072 Tübingen (DE)
(74) Representative: Schlosser, Martin

(57) **Abstract**

The invention relates to a liquid supply device for animals, especially for rodents, wherein a bottom of a liquid supply channel connecting a container and a tray is inclined by at least 1° and by at most 5° with respect to a reference plane.

## Description

The invention relates to a liquid supply device for animals.

Typical liquid supply devices for animals comprise the following components:
- a container for storing liquid, the container having a downwardly facing opening,
- a tray having an upwardly facing opening such that an animal can drink liquid present in the tray, the opening of the tray being positioned vertically above the opening of the container, and
- a liquid supply channel connecting the opening of the container with the tray.

Typically, the liquid supply device is adapted to be positioned with a reference plane being in horizontal orientation such that liquid stored in the container flows through the liquid supply channel to fill the tray up to a liquid level defined by the liquid supply channel.

Known liquid supply devices are, for example, disclosed in the document
DE 20 2013 102 888 U1 or in the document US 5,488,927. Such liquid supply devices are generally useful in supplying large amounts of liquid, especially water, to animals like cats or dogs. Refilling is typically necessary after a couple of days when the majority of the stored liquid has been consumed by the animal.

It has been discovered that known liquid supply devices for animals are not suitable for situations in which a predefined small amount of liquid should be provided to an animal. For example, a need to provide such small amounts of liquid can arise if drugs should be applied to the animal or if liquid consumption of the animal should be controlled intentionally in order to prepare the animal for certain behavioral experiments.

It is thus an object of the invention to provide for a liquid supply device for animals that is optimized with respect to the provision of predefined small amounts of liquid.

This object is solved by a liquid supply device according to claim 1. Preferred embodiments can, for example, be derived from the dependent claims. The content of the claims is made a content of the description by explicit reference.

The invention relates to a liquid supply device for animals.

The liquid supply device comprises a container for storing liquid, the container having a downwardly facing opening.

The liquid supply device comprises a tray having an upwardly facing opening such that an animal can drink liquid present in the tray. The opening of the tray is positioned vertically above the opening of the container.

Furthermore, the liquid supply device comprises a liquid supply channel connecting the opening of the container with the tray.

The liquid supply device is adapted to be positioned with a reference plane being in horizontal orientation such that liquid stored in the container flows through the liquid supply channel to fill the tray up to a liquid level defined by the liquid supply channel.

It should be noted that the reference plane can be a plane defined by or defined in relation to any component of the liquid supply device. Preferably, the reference plane may be defined by a surface, especially an outer surface, of the liquid supply device.

In the typical orientation, liquid flows from the container to the tray such that the defined liquid level is reached, wherein flowing of too much liquid is prevented by a vacuum present in the container above the liquid stored in the container. Only after the liquid level falls below a predefined level, for example due to an animal drinking from the tray, air can flow in the container, reducing the vacuum and causing additional liquid to flow out of the container into the tray.

According to the invention, a bottom of the liquid supply channel is inclined from the opening of the container down to the tray by at least 1° and by at most 5° with respect to the reference plane.

With the described inclination between 1° and 5°, small amounts of liquid flow from the container to the tray in all relevant situations.

As the inventors of the present invention have discovered, liquid supply devices not having an inclination at the bottom of a liquid supply channel tend to withhold certain amounts of liquid in or under the container, thus preventing the liquid from completely flowing into the tray. While such small amounts are not relevant for liquid supply devices according to the prior art, they are relevant in the present case where the amount of liquid an animal consumes should be controlled exactly. Thus, it has been discovered that an inclination by at least 1° is preferable for a situation in which small amounts of liquid should be provided.

Furthermore, the inventors of the present invention have discovered that providing an inclination of more than 5° leads to devices in which small amounts of liquid, for example a few milliliters, cannot be filled into the container securely. In other words, when the bottom is inclined by more than 5°, such small amounts of liquid will not produce a sufficient vacuum above the liquid in the container in order to prevent the liquid from immediately flowing out of the container.

It should be noted that the reference plane is typically a horizontal plane such that the inclination between 1° and 5° of the bottom, or any other inclination mentioned herein, is typically taken with reference to a horizontal orientation.

It should also be noted that the term that the opening of the tray is positioned vertically above the opening of the container is typically to be understood such that a coordinate of the opening of the tray on a vertical axis has a higher value than a coordinate of the opening of the container. However, the opening of the tray is typically positioned besides the opening as seen in a projection to a horizontal plane.

Preferably, the liquid supply channel is covered by a top portion. Typically, a lowest part of the top portion defines the liquid level. However, it should be noted that also other parameters may be relevant for the definition of the liquid level.

In a typical implementation, the top portion has its lowest part where the liquid supply channel ends in the tray. However, the lowest part of the top portion can also be anywhere else in the liquid supply channel. Typically, the liquid level appears above the lowest part of the top portion, as defined by this lowest part of the top portion in conjunction with the vacuum above the liquid in the container.

In case the liquid level becomes lower than the lowest part of the top portion, for example due to the animal drinking liquid from the tray, air will typically flow from the tray through the liquid supply channel in the container, thus reducing the vacuum and allowing more liquid to flow from the container through the liquid supply channel into the tray.

According to a typical implementation, the reference plane is a bottom area or a bottom surface of the liquid supply device. Thus, the liquid supply device can, for example, be put on a horizontal surface such that the inclination of the bottom of the liquid supply channel is defined relative to a horizontal orientation.

According to an advancement, the liquid supply device comprises a mount being adapted to fasten the liquid supply device to a cage. Such a mount can be used to securely provide the liquid supply device into a cage of an animal. For example, such a cage can be a typical cage for rodents like mice or rats.

In an implementation, the reference plane is defined in or by the mount. For example, the mount can be adapted to be fastened at a horizontal or a vertical part of the cage such that the inclination of the bottom of the liquid supply channel is defined relative to a horizontal orientation.

It should be noted that the definition of the reference plane by a bottom of the liquid supply device and by a mount are not exclusive to each other, but can also be applied at the same device. For example, a liquid supply device can be adapted to be put on a surface and can additionally be adapted to be fastened by a mount.

Especially preferably, the bottom of the liquid supply channel is inclined with respect to the reference plane by 2°. This inclination has been proven especially suitable in the range of 1° to 5° noted above. The inclination may also be at least 1°, 2°, 3° or 4°. The inclination may also be at most 2°, 3°, 4° or 5°. Also, all combinations of such upper and lower values may be taken to define ranges that are part of the disclosure of the present application.

Especially, the bottom of the liquid supply channel may be a flat surface having the inclination. Portions being not inclined with respect to the reference plane may be arranged besides the flat inclined surface. Especially, such flat surfaces may be positioned below the container and/or in the tray. Preferably, there is no part of the bottom or the inclined flat surface having an inclination outside the claimed range or any other range or value being disclosed in this application.

Preferably, the liquid supply device is partially or fully formed of a material being resistant against biting by rats and/or mice. In addition, it is preferable that the liquid supply device is partially or fully made of non-toxic material.

It has been discovered that rats and mice tend to chew materials in their surroundings, in contrast to other animals like, for example, cats or dogs. Thus, it is preferable that the liquid supply device is resistant against biting and is non-toxic for the animals, because otherwise the liquid supply device could be destroyed and/or the animal could become sick due to chewing or eating the material of the liquid supply device.

According to an embodiment, the liquid supply channel and/or the tray and/or the mount are partially or fully formed of ABS (Acrylonitrile butadiene styrene) polymer. Such an ABS polymer has been proven suitable for typical applications. Especially, it is resistant against biting by rats and/or mice and it is non-toxic.

According to an embodiment, the container is partially or fully formed of polycarbonate material. This material is also resistant against biting by mice and/or rats and is non-toxic. For the purpose of forming a container, it has been discovered that polycarbonate material is easy to manufacture and to handle.

Preferably, the container has a volume between 0.5 ml and 25 ml. Such volumes are typical in laboratory applications where rodents like mice or rats are held for behavioral experiments. They correspond to typical volumes of liquids consumed by such animals. With the liquid supply device according to the invention, liquid supply in this volume range can be controlled exactly.

The volume may also be at least 1 ml, 5 ml, or 10 ml. The volume may also be at most 1 ml, 5 ml, 10 ml, or 20 ml. Also, all combinations of such upper and lower values may be taken to define ranges that are part of the disclosure of the present application.

According to a preferred embodiment, the liquid supply device is manufactured using a 3D printer. This has been discovered as a fast, reliable, and cheap manufacturing tool for liquid supply devices according to the invention.

According to an embodiment, the container has a cylindrical shape extending vertically. The vertical extension is especially defined with respect to the reference plane or with respect to a horizontal orientation. The container having a cylindrical shape and a vertical orientation provides for smooth liquid flow from the container into the tray.

Preferably, the container has an outer diameter between 20 mm and 30 mm. Especially preferably, the container has an outer diameter of 25 mm. Especially, an inner diameter can be 21 mm. Such diameters have been proven suitable for typical applications, especially in the volume range mentioned above.

Preferably, the container is closed aside from its opening. This allows for a vacuum to be provided above the liquid in the container such that liquid is prevented from flowing out unintentionally.

The container may be closed against a lid with a sealant. Especially, the container may be completely sealed with a material, for example a sealant. The lid may be the mount.

According to a preferred embodiment, the liquid supply device has a total height between 10 cm and 15 cm. Such heights have been proven suitable for typical applications, especially in the volume range mentioned above.

Preferably, the ABS material mentioned above can be a material named P400 ABS or P500 ABS, manufactured by Stratasys Inc., 7665 Commerce Way, 55344 Eden Prairie, MN, USA.

For example, the liquid supply device can be used to provide small volumes of smaller than or equal to 0.5 ml, 1 ml, 10 ml or 25 ml per day for rodents, such as mice, rats, or gerbils. It should again be noted that liquid supply devices according to the prior art are adapted to provide much larger volumes of water, typically larger than 100 ml. With the inventive liquid supply device, volumes down to 0.5 ml can be applied, for example.

In case the liquid supply device should stand on a bottom, it is preferable that a bottom area is an elongated and/or widened surface, especially with respect to the tray and/or the container, in order to make the device stable. The bottom may be made heavy so that an animal cannot push the entire device over. For example, metal or heavy metal can be used for parts or all of the liquid supply device to prevent the device from falling. It is also possible to attach the device to a bottom, especially to a bottom of a cage, using screws or other fastening means.

It should be noted that there are also other means available for providing small amounts of liquid to animals. For example, a simple tray, which contains the intended amount of liquid, can be placed in a cage. However, liquid is likely to be spilled by the animal out of the tray. Furthermore, liquid can be applied to the animal's mouth using a syringe by manual feeding. However, this requires a large amount of time for manually feeding each animal.

In contrast thereto, the inventive liquid supply device prevents spilling because only a part of the stored liquid is present in the tray and allows the animal to drink itself without human intervention.

It should also be noted that resistance against chewing can also be achieved by a suitable thickness of a material.

As an alternative to the materials mentioned above, also other plastic materials can in general be used.

Further details and advantages will be apparent from the following description of an embodiment which is given with respect to the enclosed drawing, in which:
- Fig. 1:: shows a liquid supply device in a perspective view,
- Fig. 2:: shows a sectional view of the liquid supply device.

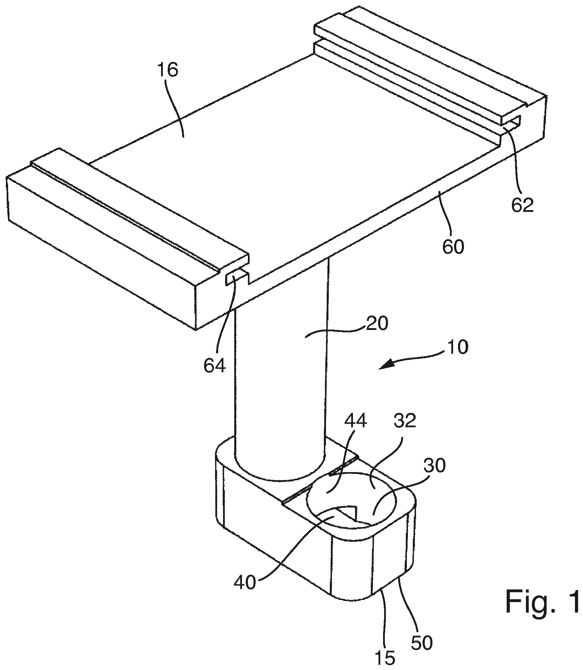

Fig. 1 shows a liquid supply device 10 according to an embodiment of the invention. The liquid supply device 10 comprises a container 20 for storing liquid.

The liquid supply device 10 comprises a tray 30 to provide the liquid stored in the container 20 to an animal, especially to a rodent.

The tray 30 comprises an upwardly facing opening 32, through which the animal can access the tray 30.

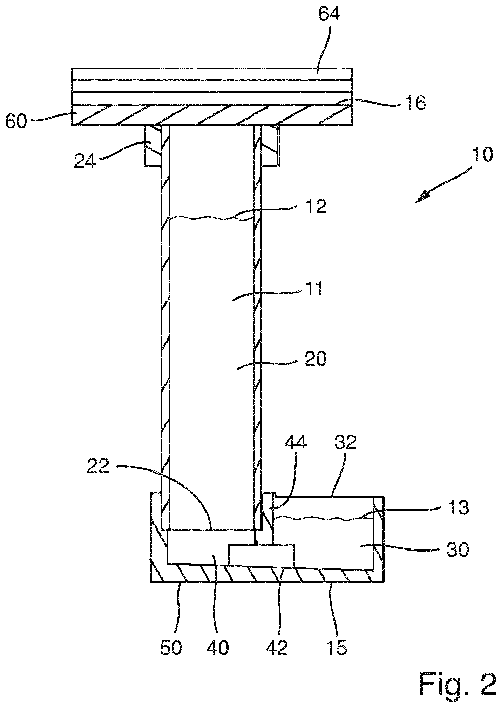

Between the container 20 and the tray 30 is provided a liquid supply channel 40, which is covered by a top portion 44. Further details with respect to the liquid supply channel 40 will be discussed further below with reference to fig. 2.

On top of the container 20 there is provided a mount 60. The mount 60 comprises a first U-shaped claw 62 and a second U-shaped claw 64. With these claws 62, 64, the liquid supply device 10 may be attached to a cage of an animal, especially to a cage of a rodent.

At the bottom of the liquid supply device 10, there is provided a bottom area 50, which is not visible in fig. 1. The bottom area 50 is a plane on which the liquid supply device 10 may stand on a surface, especially if the liquid supply device 10 is not attached to a cage with the mount 60.

The liquid supply device 10 comprises a first reference plane 15 and a second reference plane 16. The first reference plane 15 is identical to the bottom area 50. The second reference plane 16 is defined on top of the mount 60. The first reference plane 15 and the second reference plane 16 are parallel to each other. It should be noted that these reference planes 15, 16 are typically oriented horizontally in a typical use situation of the liquid supply device 10.

It should be noted that the two reference planes 15, 16 are illustrated here only for the purpose of demonstrating that a plurality of reference planes may be present in a liquid supply device 10. It should be noted that one such reference plane 15, 16 is generally sufficient in order to provide for a reference that is typically oriented horizontally.

The container 20 has a generally cylindrical shape extending vertically, especially if the reference planes 15, 16 are oriented horizontally.

Fig. 2 shows the liquid supply device 10 in a sectional view with liquid 11 inside. With respect to the elements already discussed, reference is made to fig. 1.

In the container 20, there is stored liquid 11 up to a container liquid level 12. The container 20 is sealed to the mount 60 with a sealant 24, such that a vacuum is present above the container liquid level 12 in the container 20.

The container 20 comprises a downwardly facing opening 22, through which liquid 11 may be discharged into the liquid supply channel 40. The liquid 11 can flow into the tray 30 through the liquid supply channel 40.

Depending on the design of the liquid supply channel 40, especially depending on the top portion 44 of the liquid supply channel 40, a liquid level 13 in the tray 30 will be achieved. Especially, the liquid level 13 in the tray 30 is dependent on the lowest part of the top portion 44 and the vacuum above the liquid 11. Typically, the liquid level 13 in the tray 30 will be a certain distance above the lowest portion of the top portion 44.

The liquid supply channel 40 has a bottom 42. The bottom 42 is inclined with respect to the first reference plane 15 and the second reference plane 16 with an angle of exactly 2°. This angle has been proven especially suitable for providing small amounts of liquid, for example smaller than 1 ml or only several milliliters, to animals. As shown, the whole bottom 42 of the liquid supply channel 40 is inclined with a constant inclination, including parts below the container 20 and in the tray 30.

In the present case, the container 20 has an outer diameter of 25 mm and an inner diameter of 21 mm. The total height of the liquid supply device 10 is only 15 cm. Thus, the liquid supply device 10 is suitable for providing small amounts of liquid to an animal, for example only several milliliters.

The angle of 2° of the bottom 42 has two specific advantages.

First, small amounts of liquid 11 can be provided into the container 20 without the risk that air will leak into the container 20, destroying the vacuum above the liquid 11, which would arise at higher inclination angles.

Second, even small amounts of liquid 11 that may be present in the container 20 flow from the container 20 into the tray 30, even if the liquid 11 has already fallen below the downwardly facing opening 22 of the container 20. Without an inclination angle, for example with a horizontally oriented bottom of the liquid supply channel 40, the remaining liquid 11 would not flow into the tray 30.

The container 20 is made of polycarbonate material. The remaining parts of the liquid supply device 10 are made of ABS material. These materials have been proven suitable for typical applications, because they are non-toxic and are resistant against biting by rodents.

The claims comprised by this application do not constitute an abdication of a broader scope of protection.

If it becomes apparent during the proceedings that a feature or item or a group of features or items is not absolutely necessary, the applicant intends already at time of filing a formulation not comprising the feature or item or the group of features or items. This can, for example, be a subcombination of a claim filed on the filing date, or a subcombination of a claim filed on the filing date being further restricted by further features or items. Claims or feature combinations being formulated in that way are to be understood as being comprised by the disclosure of this application.

It is further to be understood that arrangements, features and variants of the invention, that are described in the various implementations and embodiments and/or that are shown in the figures, can be combined arbitrarily among each other. Features, both alone and in combination, can be exchanged arbitrarily against each other. Feature combinations resulting therefrom are to be understood as being comprised by the disclosure of this application.

References in dependent claims are not to be understood as an abdication of a separate protection for the features of the dependent claims. These features can also be combined arbitrarily with other features.

Features or items that are only disclosed in the description or features or items that are disclosed in the description or in a claim only in connection with other features can generally be of separate inventive significance. Thus, they can also be incorporated in claims separately in order to distinguish against prior art.

## Claims

1. Liquid supply device (10) for animals, the liquid supply device (10) comprising:
- a container (20) for storing liquid (11), the container (20) having a downwardly facing opening (22),
- a tray (30) having an upwardly facing opening (32) such that an animal can drink liquid present in the tray (30), the opening (32) of the tray (30) being positioned vertically above the opening (22) of the container (20),
- a liquid supply channel (40) connecting the opening (22) of the container (20) with the tray (30),
- wherein the liquid supply device (10) is adapted to be positioned with a reference plane (15, 16) being in horizontal orientation such that liquid (11) stored in the container (20) flows through the liquid supply channel (40) to fill the tray (30) up to a liquid level (13) defined by the liquid supply channel (40),
**characterized in that**
- a bottom (42) of the liquid supply channel (40) is inclined from the opening (22) of the container (20) down to the tray (30) by at least 1 ° and by at most 5° with respect to the reference plane (15, 16).

2. Liquid supply device (10) according to claim 1,
**characterized in that**
- the liquid supply channel (40) is covered by a top portion (44),
- wherein a lowest part of the top portion (44) defines the liquid level (13).

3. Liquid supply device (10) according to one of the preceding claims, **characterized in that**
- the reference plane (15, 16) is a bottom area (50) of the liquid supply device (10).

4. Liquid supply device (10) according to one of the preceding claims, **characterized in that**
- the liquid supply device (10) comprises a mount (60) being adapted to fasten the liquid supply device (10) to a cage.

5. Liquid supply device (10) according to claim 4,
**characterized in that**
- the reference plane (15, 16) is defined in or by the mount (60).

6. Liquid supply device (10) according to one of the preceding claims, **characterized in that**
- the bottom (42) of the liquid supply channel (40) is inclined with respect to the reference plane (15, 16) by 2°.

7. Liquid supply device (10) according to one of the preceding claims, **characterized in that**
- the liquid supply device (10) is partially or fully formed of a material being resistant against biting by rats and/or mice and/or of non-toxic material.

8. Liquid supply device (10) according to one of the preceding claims, **characterized in that**
- the liquid supply channel (40) and/or the tray (30) and/or the mount (60) are partially or fully formed of ABS polymer.

9. Liquid supply device (10) according to one of the preceding claims, **characterized in that**
- the container (20) is partially or fully formed of polycarbonate material.

10. Liquid supply device (10) according to one of the preceding claims, **characterized in that**
- the container (20) has a volume between 0.5 ml and 25 ml.

11. Liquid supply device (10) according to one of the preceding claims, **characterized in that**
- the liquid supply device (10) is manufactured using a 3D printer.

12. Liquid supply device (10) according to one of the preceding claims, **characterized in that**
- the container (20) has a cylindrical shape extending vertically.

13. Liquid supply device (10) according to one of the preceding claims, **characterized in that**
- the container (20) has an outer diameter between 20 mm and 30 mm, especially 25 mm.

14. Liquid supply device (10) according to one of the preceding claims, **characterized in that**
- the container (20) is closed aside from its opening.

15. Liquid supply device (10) according to one of the preceding claims, **characterized in that**
- the liquid supply device (10) has a total height between 10 cm and 15 cm.
